Europäisches Patentamt

European Patent Office

Office européen des brevets

(11) Publication number: **0 168 178**
**B1**

(12) **EUROPEAN PATENT SPECIFICATION**

(45) Date of publication of patent specification: **21.03.90**

(51) Int. Cl.[5]: **B 23 P 9/00,** B 23 B 5/08

(21) Application number: **85304176.2**

(22) Date of filing: **12.06.85**

(54) **Processes for finishing guide rollers.**

(30) Priority: **14.06.84 JP 122704/84**

(43) Date of publication of application:
**15.01.86 Bulletin 86/03**

(45) Publication of the grant of the patent:
**21.03.90 Bulletin 90/12**

(84) Designated Contracting States:
**AT DE FR GB NL**

(56) References cited:
**CH-A- 103 924**
**CH-A- 486 285**
**DE-A-1 627 160**
**DE-C- 518 279**
**US-A-1 454 684**
**US-A-3 451 172**

**SOVIET INVENTIONS ILLUSTRATED, section
P,Q, week J 51, February 9, 1983; DERWENT
PUBLICATIONS LTD., London**

(73) Proprietor: **SONY CORPORATION
7-35 Kitashinagawa 6-Chome Shinagawa-ku
Tokyo 141 (JP)**

(72) Inventor: **Kori, Takuaki c/o Patent Division
Sony Corporation 7-35 Kitashinagawa-6
Shinagawa-ku Tokyo (JP)**
Inventor: **Ozawa, Hirotaka c/o Patent Division
Sony Corporation 7-35 Kitashinagawa-6
Shinagawa-ku Tokyo (JP)**
Inventor: **Sugawara, Shiro c/o Patent Division
Sony Corporation 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

Courier Press, Leamington Spa, England.

## Description

This invention relates to processes for finishing guide rollers, more particularly, precision guide rollers for video tape recorders (VTRs).

In general, a guide roller for a VTR comprises a cylindrical guide roller sleeve with annular bearings and an oil-seal inserted into an axial opening through the roller sleeve. The bearing is made of a sintered metal impregnated with oil. Such guide rollers, particularly guide rollers for VTRs and so forth, which will be referred to hereafter as "VTR guide rollers", must be machined to a smooth and very even surface finish.

Various attempts have been made to provide satisfactorily precise surfacing processes for VTR guide rollers, but conventional manufacturing processes for VTR guide rollers have unsatisfactorily low yields, resulting in high production costs.

US patent specification US-A-3 541 905 discloses a method of cutting a tubular workpiece radially into rings with a rotating cutting tool. The workpiece is rotated by a belt and is held in a loop of the belt which extends at least 180° around the workpiece.

German patent specification DE-C-518 279 discloses an apparatus for holding rings, particularly piston rings, the outer surfaces of which are to be ground by a grinding wheel. The piston rings are rotated and pressed against a holding shaft by rollers.

According to the present invention there is provided a process for finishing the outer surface of a guide roller for a video tape recorder, the guide roller having a central bore for accommodating bearings and/or lubricating elements, the processing being characterised by the steps of:

inserting bearings into the central bore of a video tape recorder guide roller, thus forming an assembly;

mounting said assembly on a stationary shaft so that said assembly is free to rotate around said shaft;

driving said assembly to rotate by means of a driving belt which engages said outer surface of said guide roller at a known point of contact and with a given tension; and

machining said outer surface of said guide roller to a desired finished radius by means of a machining bit in contact with said outer surface of said guide roller at a point diametrically opposite said point of contact between said driving belt and said outer surface of said guide roller, and at a contact pressure less than said belt tension.

Assembling the guide roller assembly prior to surface machining avoids degradation of the finished surface during the assembly process, which is conventionally performed after surfacing the guide roller sleeve. Also, by driving the guide roller assembly to rotate by means of a driving belt, surfacing is made simpler and does not require highly skilled personnel. Furthermore, the guide rollers can be manufactured with a high yield.

An apparatus for finishing guide rollers includes a support rotatably supporting the guide roller assembly, and a driving belt which drives the guide roller assembly to rotate. A cutting tool is mounted opposite the guide roller assembly supported by the support and can be moved towards and away from the guide roller assembly for machining.

The invention will now be described by way of example with reference to the accompanying drawings, throughout which like parts are referred to by like references, and in which:

Figure 1 is a longitudinal section through a typical guide roller produced by a finishing process according to the present invention;

Figure 2 is a longitudinal section through a guide roller assembly;

Figure 3 is a cross section through the guide roller assembly taken during surfacing;

Figure 4 is a perspective view of a preferred apparatus for performing a process according to the invention; and

Figure 5 is a fragmentary side elevation of another apparatus.

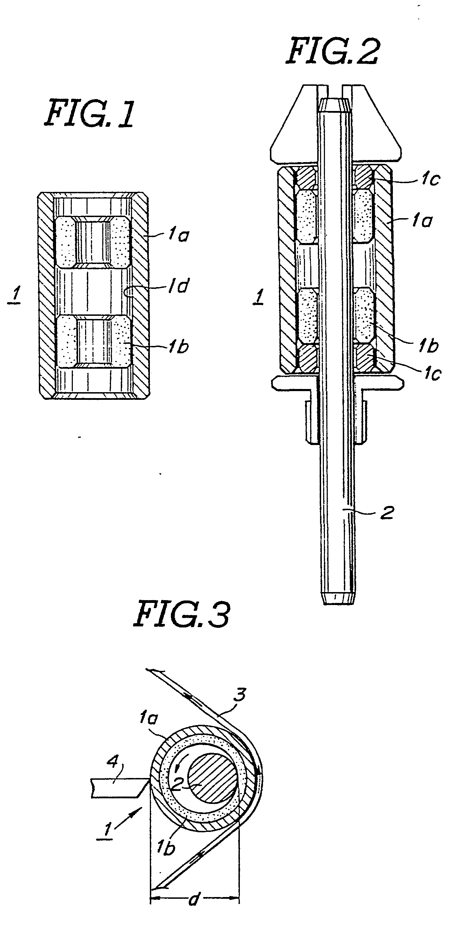

Before a detailed description of the preferred embodiment of the invention, a typical guide roller 1 will be described with reference to Figures 1 and 2.

As shown in Figure 1, the guide roller 1 comprises a cylindrical guide roller sleeve 1a and stationary bearings 1b. The bearings 1b are pressed into the axial through-opening 1d of the guide roller sleeve 1a. The bearings 1b are made of a sintered metal impregnated with oil. A roller shaft 2 passes through the bearings 1b and rotatably supports the guide roller sleeve 1a. Oil-seals 1c are then inserted into either end of the through-opening 1d. The guide roller sleeve 1a, the bearings 1b, the oil-seals 1c and the roller shaft 2 constitute a guide roller assembly.

Figure 3 illustrates the fundamental concepts of the preferred embodiment of a finishing process for guide rollers and according to the invention, by which the guide roller sleeve 1a can be surfaced with high uniformity. During the finishing process, the guide roller assembly is driven by a driving belt 3 which passes over the outer surface of the guide roller sleeve 1a. The driving belt 3 presses against the outer surface of the guide roller sleeve with a given tension. The tension on the driving belt 3 is referred to hereafter as the "belt pressure".

A cutting bit 4 opposes the outer surface of the guide roller sleeve 1a and is held against the opposing surface of the guide roller sleeve 1a with a given pressure. This section of the outer surface of the guide roller sleeve 1a is referred to hereafter as the "cutting section", and diametrically opposes the point of contact between the driving belt 3 and the outer surface of the guide roller sleeve 1a. The given pressure at which the bit 4 engages the outer surface of the guide roller sleeve 1a is referred to hereafter as the "bit pressure".

In Figure 3, d represents the distance between a point on the inner surface of a bearing 1b to a diametrically opposing point on the outer surface of the guide roller sleeve 1a. As will be appreciated from Figure 3, the diameter of the roller shaft 2 is smaller than the inner diameter of the bearings 1b. Although it is not shown in Figure 3, the roller shaft 2 is supported rigidly at both ends by a suitable supporting means, so that the roller shaft 2 will not move during finishing.

Theoretically, assuming the belt pressure on the guide roller sleeve 1a is substantially greater than the bit pressure, the guide roller sleeve 1a will be held against the bit 4 at a constant pressure while the distance d remains constant. In this case, the entire outer surface of the guide roller sleeve 1a will be machined evenly by the bit 4.

In practice, surfacing uniformity is influenced by:

circularity of the inner surface of the bearings 1b and the outer surface of the roller shaft 2;

roughness of the inner surface of the bearings 1b and the outer surface of the roller shaft 2; and

clearance between the inner surface of the bearings 1a and the outer surface of the roller shaft 2.

Therefore, in order to ensure satisfactory surface uniformity, the circularity, the roughness and clearance must all be well adjusted.

In addition, the following considerations are important in achieving a uniform surface finish:

the diameter of the roller shaft 2 in relation to the inner diameter of the bearing 1b;

the material of the roller shaft 2 in relation to that of the bearing 1b;

a suitable tool bit 4 with respect to the material of the guide roller sleeve 1a;

a suitable driving mechanism for the guide roller sleeve 1a, that is the material, width and thickness of the driving belt 3, the tension of the driving belt 3, the angle of contact between the driving belt 3 and the outer surface of the guide roller sleeve 1a, and the drive motor; and

cutting conditions, that is cutting speed, feed rate and cutting depth, in relation to the material of the guide roller sleeve 1a.

Once the conditions set forth above have been suitably selected, the guide roller sleeve 1a can be very evenly finished.

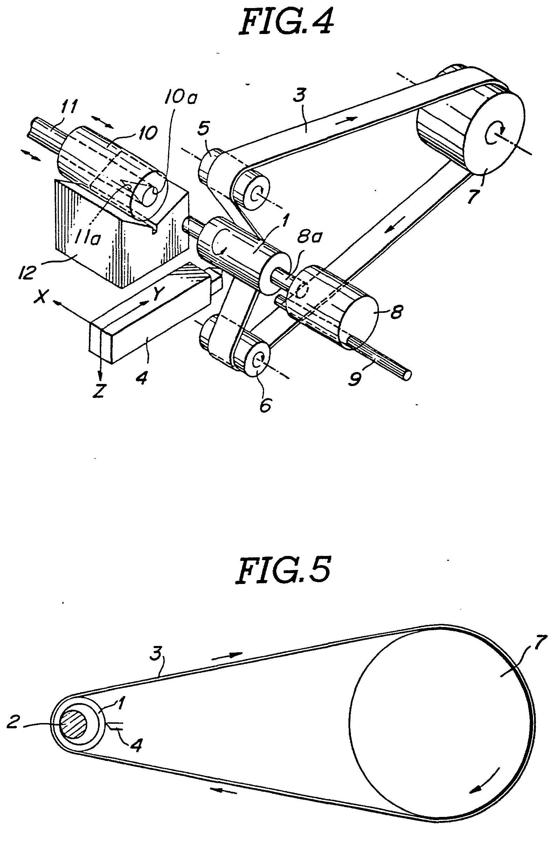

Figure 4 shows the essential elements of an apparatus for finishing guide rollers. The apparatus includes a support shaft 8a extending from a holder 8. A eject rod 9 also extends through a hole in the holder 8. Although it is not clearly shown in Figure 4, the holder 8 is stationarily secured to the apparatus so as to define the stationary rotational axis of the guide roller sleeve 1a while the rod 9 is free to move axially. A work base 12 opposes the holder 8. The work base 12 has an essentially V-shaped top 12a on which the guide roller sleeve 1a with the bearing 1b is to be mounted in the initial stages of the surfacing operation.

A push rod 10 and a coaxial boss 11 are movable axially towards and away from the holder 8 independently of each other. The push rod 10 rests on the V-shaped top 12a of the work base 12 and is used to push the guide roller sleeve 1a with the bearings 1b onto the support shaft 8a extending from the holder 8. When the guide roller sleeve 1 is placed on the work base 12, it is substantially coaxial with the support shaft 8a. Similarly, the boss 11 can pass through a central bore 10a through the push rod 10. At one extreme of travel of the boss 11, an end opening 11a thereof engages the free end of the support shaft 8a so as stationarily to support the support shaft 8a.

The driving belt 3 is wound around a driving pulley 7 and upper and lower tension pulleys 5 and 6. The pulleys 5, 6 and 7 may be journalled on the apparatus. The driving pulley 7 is driven by a drive motor (not shown) through a suitable power transmission mechanism.

The pulleys 5, 6 and 7 may be mounted on a movable frame (not shown) for movement towards and away from the guide roller sleeve 1a mounted on the support shaft 8a.

The bit 4 is adjustably mounted on the apparatus for movement along the x, y and z-axes. The x-axis of the bit 4 represents the direction of feed of the bit 4 relative to the guide roller sleeve 1a during machining. The y-position of the bit 4 determines the cutting depth during machining. The z-position adjustment may be necessary for height adjustment.

Before machining, the bearings 1b are pressed into the guide roller sleeve 1a. After this pre-assembly of the bearings 1b with the guide roller sleeve 1a, the guide roller sleeve 1a is mounted in the working section of the apparatus in a multistep process. First, the guide roller pre-assembly is placed on the work base 12 such that the through-opening 1d is in alignment with the support shaft 8a. Thereafter, the push rod 10 is moved towards the holder 8 so as to drive the support shaft 8a through the through-opening 1d of the guide roller sleeve 1a. Thereafter, the boss 11 is inserted through the central bore 10a of the push rod 10 so as to engage the free end of the support shaft 8a.

During this initial mounting stage of the process, the upper and lower tension pulleys 5 and 6 are released so that the drive belt 3 is not held securely against the guide roller sleeve 1a.

After mounting the guide roller sleeve 1a in the working section, the upper and lower tension rollers 5 and 6 are moved towards the guide roller sleeve 1a to tighten the drive belt 3 into contact with the guide roller sleeve 1a at the contact point at a predetermined pressure. Then, the driving pulley 7 is driven by the motor in the direction shown by the arrow in Figure 4. The bit 4 is moved towards the guide roller sleeve 1a so as to bring the cutting edge into contact with the guide roller sleeve 1a at a predetermined initial cutting section. The initial bit position is determined by the desired cutting depth. Then, the bit 4 is driven parallel to the longitudinal axis of the guide roller sleeve 1a at a predetermined speed.

Preferably, the apparatus will have a rough finishing bit and a fine finishing bit at different positions along the z-axis. In this case, the rough finishing bit and the fine finishing bit are brought into contact with the outer surface of the guide roller sleeve 1a in the stated order. It is also possible to arrange the rough finishing bit and the fine finishing bit horizontally so that rough finishing and fine finishing can be performed in a single-step machining operation.

Although in the apparatus shown, the tension pulleys 5 and 6 move towards and away from the work section in which the guide roller sleeve 1a is mounted, it would also be possible to provide stationary tension pulleys and a movable holder 8 and boss 11 for shifting the guide roller sleeve 1a towards the drive belt 3 after mounting on the apparatus. In addition, in the above description, the drive belt 3 is driven after engaging the outer surface of the guide roller sleeve 1a. However, it would also be possible to start driving the belt 3 before tensioning it onto the guide roller sleeve 1a.

After the finishing operation is complete, the upper and lower tension pulleys 5 and 6 are moved away to release the drive belt 3 from the outer surface of the finished guide roller sleeve 1a. Then, the ejecting rod 9 is driven into contact with the opposing edge of the guide sleeve 1a and pushes it back onto the work base 12 and off the support shaft 8a. After returning to the work base 12, the finished guide roller sleeve 1a is ejected from the apparatus and the next guide roller sleeve 1a to be finished is supplied. The guide roller sleeves 1a may be inserted and ejected by any conventional means which does not adversely affect their surface finish.

Experiments have been performed on such an apparatus to find operating conditions suitable for achieving the desired degree of surface uniformity. The results of these experiments show the following conditions to be important:

the axes of the support shaft 8a, the shafts of the upper and lower tension pulleys 5 and 6, the shaft of the driving pulley 7 must be parallel to within 1%;

the height of the bit 4 must be accurate to within the range of −0.01 mm to −0.05 mm;

at a cutting depth of 0.01 mm radius, cutting resistance (principal component) of a work piece, that is the guide roller sleeve 1a, made of C3601 brass must be approximately 150g to 200g;

a laterial stabilizing pressure three to five times greater than the lateral pressure applied by the bit 4, which is greater than the cutting resistance is necessary; and

tension in the belt 3, which is related to the lateral pressure P as expressed in the following equation:

$$P = 2T\sin \theta/2$$

where θ is the angle of contact of the driving belt 3,

must be in the range of 300g to 500g.
The above conditions may differ depending upon the size of the work piece, the sizes of the tension pulleys 5 and 6 and the driving pulley 7, Young's modulus (expansion rate) of the drive belt 3, and the coefficient of friction of the driving belt 3 and other conditions.

Experiments we have performed have revealed that tapered guide rollers can also be surfaced by the process of the present invention. In one experiment employing the above conditions, the sintered alloy bearings were pressed into a guide roller sleeve 4.55 mm in diameter and 8.1 mm long. From this pre-assembly, a tapered guide roller sleeve with a major diameter of 4.5 mm and a taper angle of thirty minutes was formed.

Furthermore, experiments have also revealed that when oil seals made of polyoxymethylene are used, no deformation of the guide sleeve occurs upon pressing the oil seals into the sleeve. This shows that it is possible to pre-assemble the oil seals together with the bearings as well as being installed in the finished sleeve after the surfacing operation.

Figure 5 shows part of a second machining apparatus applicable to the process according to the invention. In this apparatus, the tension pulleys of the foregoing first apparatus have been omitted. In this case, the driving belt 3 is wound around the guide roller sleeve 1a such that the contact point between the outer surface of the guide roller sleeve 1a and the driving belt 3 is on the opposite side from that of the first apparatus. The bit 4 again diametrically opposes the contact point. This arrangement has substantially the same effect, provided the aforementioned experimentally derived conditions are satisfied.

It is also possible to use the roller shaft 2 of Figure 2 as the support shaft. In this case, the opposite ends of the roller shaft 2 will be retained by known suitable clamping or restraining means.

Embodiments of process according to the invention may provide the following benefits:

highly uniform surface finish and high yield;

possible damage to the surface upon inserting the bearings into the guide roller sleeve is avoided by pre-assembling the bearings and the guide roller sleeve;

machining does not require highly skilled personnel;

the process can be easily adapted to computer control;

the apparatus can be compact;

satisfactory surface uniformity can be ensured by proper care of the belt and shafts, so maintenance of the apparatus is greatly facilitated; and

the degree of wear on the apparatus can be accurately anticipated.

**Claims**

1. A process for finishing the outer surface of a guide roller (1) for a video tape recorder, the guide roller (1) having a central bore (1d) for accommodating bearings (1b) and/or lubricating elements (1b), the processing being characterised by the steps of:

inserting bearings (1b) into the central bore (1d) of a video tape recorder guide roller (1a), thus forming an assembly;

mounting said assembly on a stationary shaft (2, 8a) so that said assembly is free to rotate around said shaft (2, 8a);

driving said assembly to rotate by means of a driving belt (3) which engages said outer surface of said guide roller (1a) at a known point of contact and with a given tension; and

machining said outer surface of said guide roller (1a) to a desired finished radius by means of a machining bit (4) in contact with said outer surface of said guide roller (1) at a point diametrically opposite said point of contact between said driving belt (3) and said outer surface of said guide roller (1a), and at a contact pressure less than said belt tension.

2. A process according to claim 1 wherein said mounting step comprises the steps of:

placing said assembly on a guide base (12) by which said assembly is coaxially aligned with a stationary shaft (8a);

driving said assembly axially until it engages said shaft (8a) and disengages from said guide base (12); and

restraining said assembly axially to ensure that it remains engaged with said shaft (8a) while allowing rotation of said assembly about said shaft (8a).

3. A process according to claim 1 or claim 2 wherein the cutting resistance of said machining bit (4) is adjusted to 150g to 200g.

4. A process according to claim 1, claim 2 or claim 3 wherein said belt tension is adjusted within a range of 300g to 500g.

**Patentansprüche**

1. Verfahren zur Fertigbearbeitung der Außenfläche einer Führungsrolle (1) für einen Videorekorder, die eine zentrale Bohrung (1d) zur Aufnahme von Lagern (1b) und/oder Schmierelementen (1c) aufweist,

gekennzeichnet durch die Verfahrensschritte,

daß in die zentrale Bohrung (1d) einer Führungsrolle (1a) für Videorekorder Lager (1b) eingesetzt werden und auf diese Weise eine Baugruppe gebildet wird,

daß diese Baugruppe derart auf einer feststehenden Welle (2, 8a) montiert wird, daß sie auf dieser Welle (2, 8a) frei drehbar ist,

daß die Baugruppe durch einen Treibriemen (3) gedreht wird, der mit einer gegebenen Spannung in einem bekannten Berührungspunkt an der Außenfläche der Führungsrolle (1a) angreift, und

daß die Außenfläche der Führungsrolle (1a) mit Hilfe eines spanenden Werkzeugs (4) auf einen gewünschten Endradius bearbeitet wird, wobei dieses Werkzeug die Außenfläche der Führungsrolle (1) in einem Punkt berührt, der dem Berührungspunkt zwischen dem Treibriemen (3) und der Außenfläche der Führungsrolle (1a) diametral gegenüber liegt, und wobei der Berührungsdruck des Werkzeugs kleiner als die Spannung des Treibriemens ist.

2. Verfahren nach Anspruch 1, bei dem das Montieren der Baugruppe auf der Welle die Schritte umfaßt,

daß die Baugruppe auf einer Führungsbasis (12) angeordnet wird, mit deren Hilfe sie koaxial zu einer feststehenden Welle (8a) ausgerichtet wird,

daß die Baugruppe in axialer Richtung bewegt wird, bis sie mit der Welle (8a) in Eingriff kommt und von der Führungsbasis (12) gelöst ist, und

daß die Baugruppe in ihrer axialen Position fest gehalten wird, um sicherzustellen, daß sie mit der Welle (8a) in Eingriff bleibt, während ihre Rotation um diese Welle (8a) ermöglicht wird.

3. Verfahren nach Anspruch 1 oder 2, bei dem der Schnittwiderstand des spanenden Werkzeug auf 150g bis 200g eingestellt wird.

4. Verfahren nach Anspruch 1, 2 oder 3, bei dem die Spannung des Treibriemens im Bereich von 300g bis 500g eingestellt wird.

**Revendications**

1. Procédé pour finir la surface extérieure d'un galet de guidage (1) pour enregistreur sur bande vidéo; le galet de guidage (1) présentant un alésage central (1d) pour recevoir des coussinets (1b) et/ou éléments lubrifiants (1b), le procédé étant caractérisé par les phases consistant à:

insérer des coussinets (1b) dans l'alésage central (1d) d'un galet de guidage (1a) pour enregistreur sur bande vidéo, pour former ainsi un ensemble;

monter ledit ensemble sur un arbre fixe (2, 8a) de manière que ledit ensemble soit libre de tourner autour dudit arbre (2, 8a);

entraîner ledit ensemble pour le faire tourner à l'aide d'une courroie d'entraînement (3) qui attaque ladite surface extérieure dudit galet de guidage (1a) en un point de contact connu et avec une tension donnée; et

usiner ladite surface extérieure dudit galet de guidage (1a) à un rayon fini désiré au moyen d'un outil d'usinage (4) mis en contact avec ladite surface extérieure dudit galet de guidage en un point diamétralement opposé audit point de contact entre la courroie d'entraînement (3) et ladite surface extérieure dudit galet de guidage (1a), et avec une pression de contact inférieure à la tension de ladite courroie.

2. Procédé selon la revendication 1, caractérisé en ce que ladite phase de montage comprend les phases suivantes consistant à:

placer ledit ensemble sur un berceau de guidage (12) par lequel ledit ensemble est aligné coaxialement avec un arbre fixe (8a);

déplacer ledit ensemble axialement jusqu'à ce qu'il soit en prise avec ledit arbre (8a) et qu'il soit dégagé dudit berceau de guidage (12); et

bloquer ledit ensemble axialement pour garantir qu'il reste en prise avec ledit arbre (8a) tout en permettant la rotation dudit ensemble autour dudit arbre (8a).

EP 0 168 178 B1

3. Procédé selon la revendication 1 ou la revendication 2, dans lequel la résistance de coupe dudit outil d'usinage (4) est réglée sur l'intervalle de 150g à 200g.

4. Procédé selon la revendication 1, la revendication 2 ou la revendication 3, dans lequel la tension de ladite courroie est réglée sur l'intervalle de 300g à 500g.

*FIG.1*

*FIG.2*

*FIG.3*

1

## FIG.4

## FIG.5